# EUROPEAN PATENT APPLICATION

(11) **EP 2 144 426 A2**
(43) Date of publication of application: **13.01.2010**
(21) Application number: 09170628.3
(22) Date of filing: 25.09.1998
(51) Int. Cl.: H04M 1/56, H04M 1/57, H04M 1/673

(54) **Method for the managing of pieces of information and stored data in a telephone apparatus of the electronic type**

(62) Divisional of application: 98810968.2
(71) Applicant: Fenmore International Ltd., Road Town, Tortola (VG)
(72) Inventor: Sanchez, Andres, 1014, El Dorado (PA)
(74) Representative: Göken, Klaus G.

(57) **Abstract**

Method for managing pieces of information and data relating to telephone number lists, stored in a mobile telephone apparatus of the electronic type, the displaying and use thereof being allowed only after the input, by one of the users of the said apparatus, of a personal secret access code, previously defined, in order to guarantee the maximum of privacy for each of the users.

## Description

The present invention refers to telephone apparatus and in particular to a method for managing pieces of information and data relating to telephone number lists, stored in a telephone apparatus of the electronic type, the displaying and use thereof being allowed only after the input of an access code.

It is known that in some telephone apparatus it is possible to automatically memorize pieces of information and data relating to telephone numbers, corresponding to telephone calls, which have been made or received with the said apparatus, and which are maintained in suitable lists, prepared by the users or automatically by the apparatus itself.

In this way it is possible for the user to have a record of each one of the calls made or received, together with the corresponding date, duration, number and name of the calling or called persons, and in case also special notes, by voice or text according to the capacity of the apparatus and the desire of the user.

Normally the electronic telephone apparatus provide for a security accessing function, which allows to inhibit the activation of outgoing calls or of some of the different functions of the apparatus, so that any unauthorized use is prohibited; in this way however the apparatus may be used only for receiving incoming calls, or eventually for making emergency calls and the function of the apparatus is strongly limited.

In fact normally a telephone apparatus, particularly of the mobile type, is designed by the manufacturer assuming that it will be used by a single user, and therefore a single access code is foreseen; in this way, once said access code has been inputted, all the facilities of the apparatus are made possible, with the only exclusion of the reprogramming of the function parameters, which normally require a second and more complicated accessing code.

However, if the telephone apparatus, for instance of the mobile type, is used by more than one people, which can also be unknown persons, for instance employees of the same company or legal entity, such a common access possibility may constitute a violation of the privacy of the users which have legally stored into the telephone memory pieces of information or personal data, may be confidential, or which have received calls from persons which it is desired to keep unknown.

Once activated the apparatus inputting the normal accessing code, any person could not only verify the existence of said number lists, memorized by another person or automatically, but also retrieve all the data and pieces of information associated with them, and also know all the calls received by the previous user, and the relevant telephone numbers.

It is also generally possible, with the telephone apparatus, which provide for the said automatic memorization function, to cancel the list of the telephone numbers corresponding to the outgoing or incoming calls and all the corresponding notes, but it is evident that such operation is very annoying, if made systematically, and in any case nullifies all the advantages of the said automatic memorization function.

The aim of the present invention is that of indicating to a method for managing pieces of information and data relating to telephone number lists, stored in a telephone apparatus of the electronic type, the displaying and use thereof being allowed only after the input, by one of the users of the apparatus, of a personal secret access code, defined in advance, in order to guarantee the maximum of privacy to each one of the users, said method avoiding the cited disadvantages.

In order to reach such aims the subject of the present invention is a method for managing pieces of information and data relating to telephone number lists, stored in a telephone apparatus of the electronic type, having the characteristics being principally described in the first attached claim, and a telephone apparatus implementing such a method.

Preferred embodiments of the invention are described in the sub-claims.

The invention shall now be described with reference to a particular example of realization, supplied only with an explanatory and non limiting purpose, wherein:
- - figure 1: represents the block diagram of a normal telephone apparatus of the electronic type;
- - figure 2: represents a flow-chart showing in a schematic way the significant logical steps of the automatic memorization function of the telephone numbers and associated notes in an electric telephone apparatus implementing the method according to the invention;
- - figure 3: represents a flow-chart showing in a schematic way the significant logical steps of the function for the demand and the concession of a personal secret accessing code in an electronic telephone apparatus implementing the method according to the invention;
- - figure 4: represents a flow-chart showing in a schematic way the significant logical steps of the function for an outgoing call in a public mode in an electronic telephone apparatus implementing the method according to the invention;
- - figure 5: represents a flow-chart showing in a schematic way the significant logical steps of the function for an incoming call in private mode in an electronic telephone apparatus implementing the method according to the invention.

As usual in the flow charts the diamond blocks indicate decision or test steps, relating to prestored constants or, if it is the case, to dynamical data, which in any case are recalled from the apparatus memory for comparison purposes; the bottom output of said blocks corresponds to a positive result of the comparison (YES output), while the lateral outputs correspond to a negative result (NO output). The rectangular blocks correspond to operation steps, which are often a consequence of comparison made by the diamond blocks. The round blocks indicate the starting point and the end of the procedure. If not differently indicated it is assumed that, at the activation of the telephone apparatus, the indicated procedures are in the start position.

With the help of the above listed figures, the method and the device, which are the subject of the present invention, shall now be described in detail.

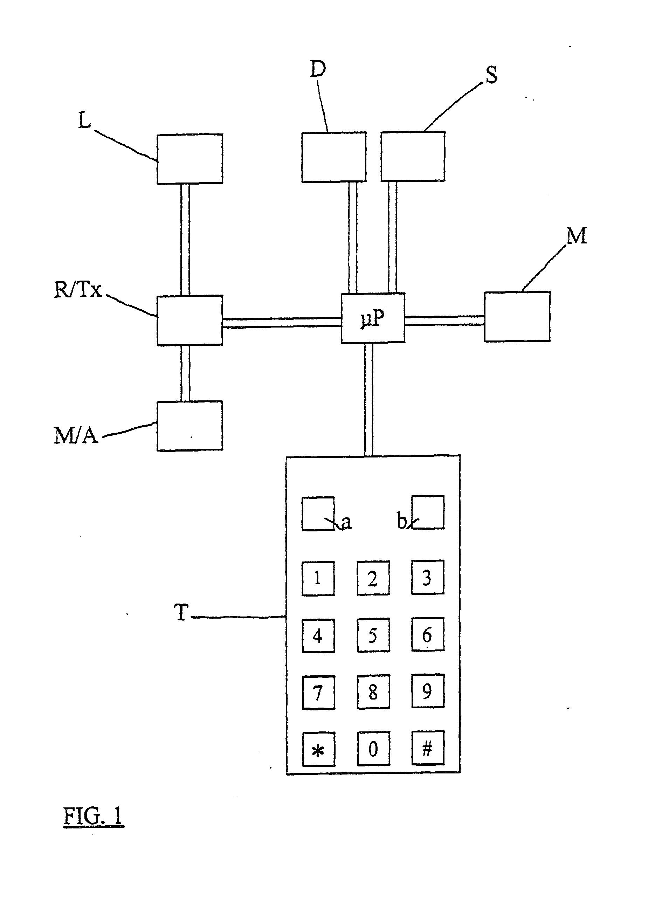

In the figure 1, with L there is indicated a normal line circuit, which allows the access to the telephone line either through a fixed connection to the network, or through a radio connection, in the case of a mobile phone; L is connected to a block R/Tx, which represents the transmitter-receiver of the telephone apparatus; R/Tx is in turn connected on one side to the handset of the microtelephone, indicated with M/A, or to the substituting device of the handset, normally represented by a microphone and a separated earpiece, and, on the other side, to the central control unit, which is indicated with µP.

The central control unit µP is in turn connected to:
- a bell, indicated with S;
- a display, indicated with D;
- a read-write memory, schematically indicated with M, which comprises both the dynamic memory and the program memory of the telephone apparatus;
- a command keyboard, having a number of keys, for instance the normal 10 keys numbered from 0 to 9, and the normal * an # keys, and other two keys, indicated with "a" and "b" in the figure, which are function keys, controlled by means of a menu shown on the display; keyboards of such a type are commonly and very often used on the mobile (cellular) phones.

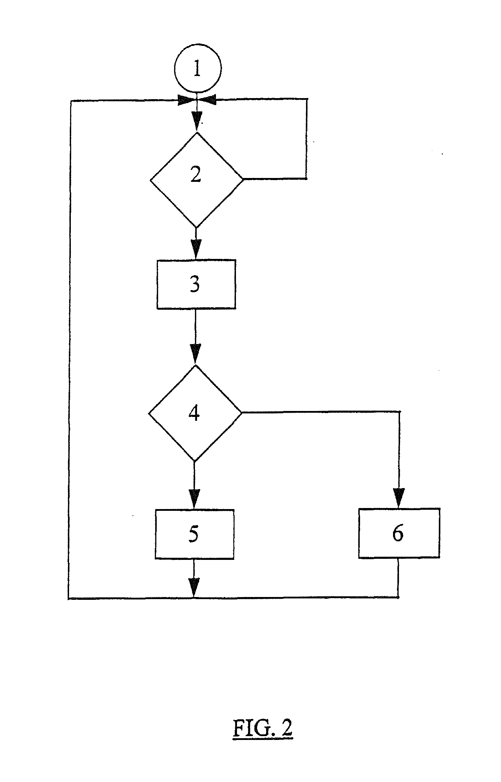

In figure 2 with 1 there is indicated the starting point of the logical flow relating to the automatic memorization function of the telephone numbers. The control operated by µP starts from the position 1 each time that the telephone apparatus is switched on; then it passes to the next phase indicated with the test block 2, wherein the checking is performed whether a number has been chosen by the user for an outgoing call, or whether an incoming call is coming from a certain telephone number; in the affirmative case the control is passed to the next operating block 3; in the negative case the control returns to the block 2.

During the phase indicated by the block 3, always under the control of µP, the telephone number chosen by the user, or the number corresponding to the incoming call, is stored in a temporary register; then the control passes to the phase of the next test block 4, where there is verified whether the temporarily stored number during the preceding phase, is comprised in the list of the code-protected numbers; in the affirmative case the control passes to the phase of the next operating block 5; in the negative case the control passes to the phase of the operating block 6.

During the phase of the block 5 the code-protected telephone number is stored in the private list corresponding to such a secret code; during the phase of the block 6, the not code-protected number is stored in the public list of the outgoing or incoming calls; after the storing in both cases the control returns to the phase of the test block 2.

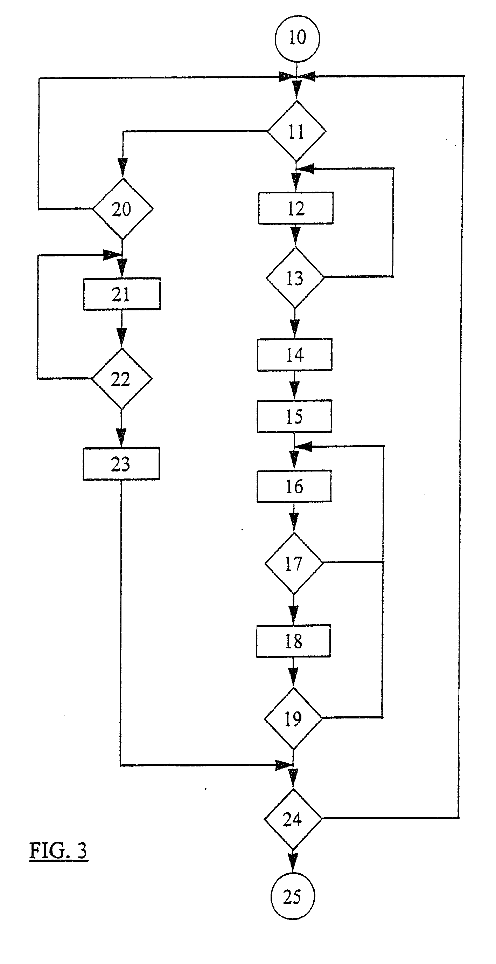

In the figure 3 with 10 there is indicated the starting point of the logical flow relating to the function for the demand and concession of a personal secret code.

The control operated by µP can arrive to the position 10 in different ways, for instance it may happen when the user demands a secret code allotting by means of the "menu" function.

The next phase is then reached, indicated with the test block 11, wherein the verification is performed whether the user has requested the concession of a secret accessing code; in the affirmative case the control passes to the next operating block 12; in the negative case, the control passes to the test block 20.

In the phase indicated with the block 12, always under the control of µP, the request of a code is acknowledged and the control is then passed to the test block 13.

In the following, in order to simplify the description, instead of saying what the central control unit performs during the different phases of the procedure, indicated by the different numbered operating or test blocks, we will express ourselves in the same way as the blocks themselves would act, so that instead of saying "in the phase indicated with the block n, the control unit µP provides for... checks whether..." we will simply say: "the block n provides for ... checks whether...".

The test block 13 verifies whether the code inputted by the user is acceptable according to predefined rules; in the affirmative case the control passes to the next block 14; in the negative case the control returns to the block 12.

The operating block 14 provides for storing the secret code and for informing the user; the control then passes to next block 15.

The operating block 15 provides for allotting a private telephone numbers memory area for the stored code; the control then passes to block 16.

The operating block 16 provides for asking for the list of the telephone numbers to be associated with the stored secret code; the control then passes to the test block 17.

The test block 17 verifies whether the code inputted by the user is acceptable; in the affirmative case the control passes to the next block 18; in the negative case the control returns to the block 16.

The block 18 provides for storing the telephone number to be protected in the private memory area corresponding to the secret code; the control then passes to the next test block 19.

The test block 19 verifies whether the number inputted by the user is the last one; in the affirmative case the control passes to the block 24; in the negative case the control returns to the block 16.

The test block 20 verifies whether the access has been requested to a private area; in the affirmative case the control passes to the next block 21; in the negative case the control returns to the block 11.

The operating block 21 provides for asking the secret access code; the control then passes to the next block 22. Under control of the central control unit µP is always possible, under determined conditions, which will be dealt with in the following, to access directly the operating block 21.

The test block 22 verifies whether the code inputted by the user is acceptable; in the affirmative case the control passes to the next block 23; in the negative case the control returns to the block 21.

The operating block 23 provides for allowing the access to the private area as requested; the control passes to block 24.

The test block 24 verifies whether the exit has been requested from the menu function; in the affirmative case the control passes to the next block 25; in the negative case the control returns to the block 11.

The block 25 is the end block of the function for the demand and concession of a secret personal code; the control passes to the general operating program of the apparatus for the other functions.

Many variations are possible to the method which has been described; one variation foresees for managing two separate and complementary orders of files of users, one of free access and another, or more than one, which are restricted. In this way an electronic telephone apparatus, for instance of the mobile (cellular) type, could be programmed for providing two different operating modes, a first one which is free (public) and a second one which is restricted (private), organized so that not necessarily a person who is enabled to use the apparatus only in public mode may suspect the existence in the electronic telephone apparatus also of one or more additional restricted modes.

The main file (public) is of free access, the additional file (private) is protected by a code-system in order to protect the privacy of the users which are enabled to access it, or in the most common case, of the proprietor of the apparatus.

In particular there is provided, in a conjunct or disjoined way, for:
- displaying the private file only after the inputting of a suitable code;
- keeping secret the incoming or outgoing calls received or made by users registered in the private file;
- refusing the calls coming from protected numbers, avoiding, if this is the case, the relevant bell ringing, whenever the apparatus is operated in the public mode.

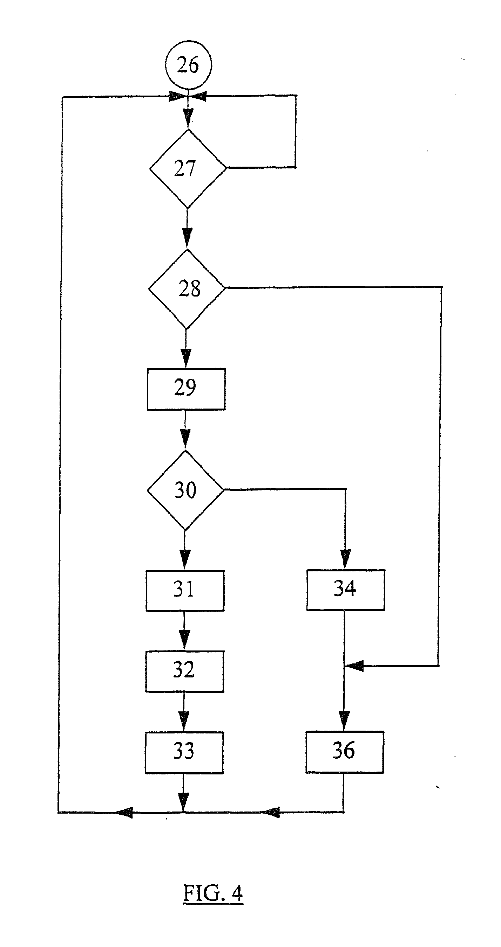

In the figure 4 with 26 there is indicated the starting point of the logical flow relating to the function of the reception of a call in the public mode. The control operated by µP arrives to the block 26 each time that the apparatus is switched on; the control then passes to the next block 27.

The test block 27 verifies whether an incoming call has been received; in the affirmative case the control passes to the next block 28; in the negative case the control returns to the block 27.

The test block 28 verifies whether the fixed or mobile telephone network has sent the identifying number of the calling user; in the affirmative case the control passes to the next block 29; in the negative case the control passes to the block 36.

The operating block 29 provides for memorizing into a temporary memory (microprocessor register) the calling number; the control then passes to the next block 30.

The test block 30 verifies whether the received number of the calling person is a protected one; in the affirmative case the control passes to the next block 31; in the negative case the control passes to the block 34.

The operating block 31 provides for refusing the incoming call and passes the control to the next block 32.

The operating block 32 provides for inhibiting any call signalling (ringing, notice on the display) call and passes the control to the next block 33.

The block 33 provides for memorizing the calling number into the private list and the control returns to the block 27.

The block 34 provides for memorizing the calling number into the public list and the control passes to the block 36.

The operating block 36 provides for activating the bell ringing and for displaying on the display the foreseen call notice; the control returns to the block 27.

Of course, according to a further variation, it is possible of providing an on request disabling of the call rejection, which can be made by a person who is enabled to access the secret code.

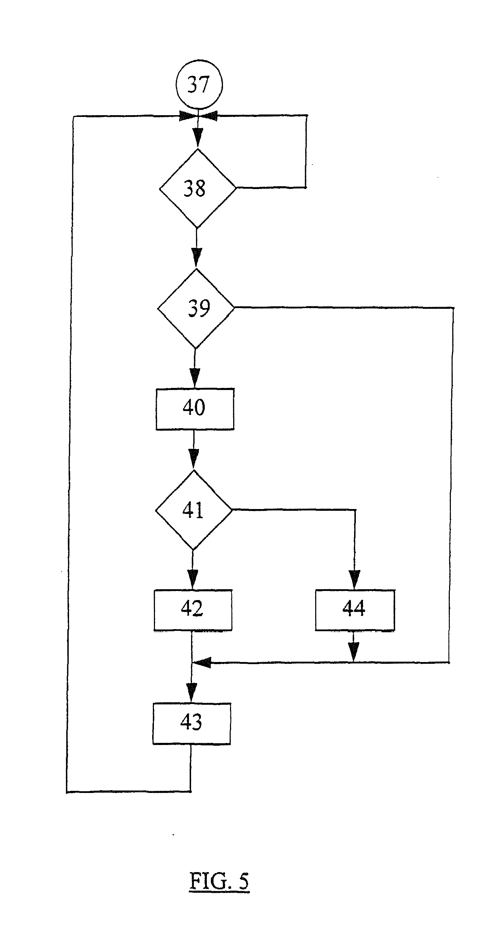

In the figure 5 with 37 there is indicated the starting point of the logical flow relating to the function for an outgoing call in the private mode. The control effected by µP can arrive to the block 37 any time that the apparatus is switched on; then it is passed to the next block 38.

The test block 38 verifies whether an incoming telephone call has been received; in the affirmative case the control passes to the next block 39; in the negative case the control returns to the block 38.

The test block 39 verifies whether the fixed or mobile telephone network has sent the identifying number of the calling user; in the affirmative case the control passes to the next block 40; in the negative case the control passes to the block 43.

The operating block 40 provides for memorizing into a temporary memory (register) the number of the calling person; the control then passes to the block 41.

The test block 41 verifies whether the received number is a protected one; in the affirmative case the control passes to the block 42; in the negative case the control passes to the block 44.

The operating block 42 provides for memorizing the calling number into the private list and the control passes to the block 43.

The operating block 44 provides for memorizing the calling number into the public list and the control passes to the block 43.

The operating block 43 provides for activating the bell ringing and for displaying on the display the foreseen call notice; the control returns to the block 38.

The logical flows which have been described in figures 2, 3, 4 and 5 and the relevant operating or the test blocks have to be considered as a general indication for a better understanding of the invention and not as a detailed, complete and exhaustive description of the process which identifies the method according to the invention.

The operation of the present invention will now be described with the aid of the previously indicated figures.

According to the invention, the memory of the telephone apparatus, provided for containing the list of the telephone numbers corresponding to the incoming and/or outgoing calls, is divided into at least two areas: a public area, which may be accessed, without any formality, by all the users, once the apparatus has been switched on, and one or more private areas, which may be accessed and viewed only after the inputting of one or more secret codes previously defined.

In the public area there will be stored all the numbers of the incoming and/or outgoing calls, with the exception of a few protected numbers, so defined by a user which inputted, with this only purpose, his (or her) secret personal code into the apparatus memory. Such protected numbers will be stored into the private memory area of the user who registered his (or her) personal secret code.

In practice the user, using the normal menu feature for setting the apparatus operating parameters, and following a preferred implementation way of the invention, shall previously define:
- his (or her) secret personal code for accessing his (or her) private memory area;
- the list of the protected numbers, which must be stored into his (or her) private memory area and not into the public area.

As a consequence the apparatus shall store all the not protected numbers into the public list of the incoming and/or outgoing calls, while shall store into the private area of the corresponding user all the protected telephone numbers of the incoming and/or outgoing calls.

The list of such protected numbers may be accessed and viewed only by the user proprietor of a personal secret code previously defined and associated to said list.

Let's assume for instance that a user has defined as his (or her) personal secret code the number 12345, and as protected telephone numbers the telephone numbers 01544992267 and 01719193276; and let's assume that the same user has then made or received telephone calls to/from the following telephone numbers: 01712531927, 01544992267, 2012191441, 0017074453475,01719193275,01719193279.

In the public list of the telephone numbers only the non protected numbers will appear, while the two protected numbers will be stored into the private list, which may be accessed and viewed only after having inputted the secret code number 12345, according to the following pattern:

| Public list: | Private list: |
|---|---|
| 01712531927 | 01544992267 |
| 2012191441 | 01719193276 |
| 0017074453475 | |
| 01719193279 | |

In order to obtain the maximum advantage from the described method according to the present invention, it is possible to foresee that, in public mode, no message could appear that could lead to guess the existence of a secret or private mode.

In order to better clear this idea we will now make an example.

Let's assume that the telephone apparatus is in the public mode.

It is advisable that no item is inserted into the menu which allows to request a secret code for accessing a private mode, because in this case a fortuitous user could ask to the proprietor of the apparatus to explain about the existence of said secret code.

An accessing command could be inputted by the user at any time, without any explicit request from the apparatus, for instance the personal secret code might be requested by the user only after the contemporary activation of a few selected keys for a few seconds, or through a predetermined sequence of commands (for instance contemporary pressing of keys 1 and 0 for 3 seconds).

At this moment the apparatus, according to the logical flow shown in figure 3, could enter the block 21 and ask for the input of the desired code and then pass in the private mode.

When the apparatus is in the private mode, on the contrary, the request for passing in the public mode could obviously appear in the menu.

It is possible to introduce variations and modifications both to the method and to the apparatus, and also to the above described realization example, without exiting the protected scope of the invention.

A second possible example of realization of the invention consists in the fact of having only one list for all the stored telephone numbers, but with the feature that, in the case of a normal use of the apparatus, only the non protected numbers of said list can be viewed, while, for viewing also the protected numbers, the user must supply in advance his (or her) secret code: in this case the list will show all the numbers of the incoming and/or outgoing calls, comprised the protected numbers.

From the given description and from the attached drawings the advantages are clear of the described method and/or the apparatus for managing pieces of information and data relating to telephone number lists, stored in a telephone apparatus of the electronic type, the displaying and use thereof being allowed only after the input of a personal secret access code, previously defined by one of the user of the apparatus, so that the maximum privacy is guaranteed for each of the users.

It is also clear that a number of variations in respect of the described example can be made, without exiting from the protection scope of the invention.

## Claims

1. Method for managing pieces of information and data relating to telephone number lists, stored in a mobile telephone apparatus of the electronic type, **characterized in that** the displaying and/or the use of a restricted part of said list of said numbers, for the outgoing and/or the incoming calls, is allowed only after the input, by one of the users of the said apparatus, of a personal secret access code, previously defined, in order to protect said numbers contained in said restricted part of the list, and that the stored lists are at least two, a first one (public) and a second one (private) and that there are provided procedures for the memorization in the first list of all the not code protected telephone numbers of the outgoing and/or incoming calls, and for the memorization in the second list, which can be accessed only after the input of the said secret code, of the code protected telephone numbers of the outgoing and/or incoming calls.

2. Method according to claim 1, **characterized in that** the stored list is only one, and that, in case of a normal use of the telephone apparatus, only the not protected numbers can be viewed, while, in order to display also the protected numbers, it is necessary, before the list is recalled, to supply a secret code number.

3. Method according to claim 1, **characterized in that** there are provided, for the telephone apparatus, two operating modes, a first mode which is free, without access restrictions, and second public mode, with access restrictions.

4. Method according to claim 3, **characterized in that,** in said public mode it is provided the possibility of rejecting an incoming call and the corresponding blocking of any visual and/or sound signal, in the case that the call is coming from one of said protected numbers.

5. Method according to claim 3, **characterized in that** the switching from said second operating mode to said first operating mode can be effected at any moment through a special keyboard command.

6. Method according to claim 5, **characterized in that** said special keyboard command consists of a particular sequence of commands and/or in a plurality of contemporary commands, having a predetermined duration.

7. Method according to claims 5 and 6, **characterized in that,** after the input of said special keyboard command, the switching to the private mode is accomplished only after the input of said personal secret code.

8. Method for managing pieces of information and data relating to telephone number lists, stored in a telephone apparatus of the electronic type, according to the teachings contained in the present description and in the attached drawings.

9. Telephone apparatus using the method for managing pieces of information and data relating to telephone number lists, stored in a telephone apparatus of the electronic type, according to one or more of the preceding claims.

10. Method for managing pieces of information and data relating to telephone number lists, stored in a telephone apparatus of the electronic type, **characterized in that** the displaying and/or the use of a restricted part of said list of said numbers, for the outgoing and/or the incoming calls, is allowed only after the input, by one of the users of the said apparatus, of a personal secret access code, previously defined, in order to protect said numbers contained in said restricted part of the list.
